# EUROPEAN PATENT APPLICATION

(11) **EP 3 854 934 A1**
(43) Date of publication of application: **28.07.2021**
(21) Application number: 21152678.5
(22) Date of filing: 21.01.2021
(51) Int. Cl.: D06N 3/14

(54) **ARTIFICAL LEATHER MATERIAL AND MANUFACTURING METHOD THEREOF**

(30) Priority: 22.01.2020 TW 109102653; 22.04.2020 TW 109113517
(71) Applicant: San Fang Chemical Industry Co., Ltd., Kaohsiung City (TW)
(72) Inventor: LIN, CHIH-YI, Kaohsiung City, (TW); CHENG, KUO-KUANG, Kaohsiung City (TW); YANG, KAO-LUNG, Kaohsiung City (TW); FU, YUNG-YU, Kaohsiung City (TW); CHANG, PI-JIE, Kaohsiung City (TW)
(74) Representative: 2K Patentanwälte Blasberg Kewitz & Reichel

(57) **Abstract**

The present disclosure is relates to a leather material (10) and a manufacturing method thereof. The leather material includes a substrate (11), a TPU adhesive layer (12) and at least one TPU surface layer (13). The substrate includes a first surface (111) and a second surface (112). The TPU adhesive layer is disposed on the first surface of the substrate. The at least one TPU surface layer is disposed on the TPU adhesive layer. The at least one TPU surface layer includes an exposing surface (131) having a texture of micro suede or micro nubuck. The leather material (10) of the present invention utilizes the TPU material, and has a texture of micro suede or micro nubuck to have an appearance of leather. In addition, the leather material (10) of the present invention has high peeling strength and high wear resistance to obtain the predetermined mechanical strength.

## Description

### FIELD

The disclosure relates to a leather material and a manufacturing method thereof.

### BACKGROUND

A conventional method for manufacturing leather materials generally uses various complex processes, and a solvent needs to be used in some processes. The solvent can be harmful to the environment and does not satisfy a requirement for environmental protection. Moreover, the conventional method for manufacturing leather materials not only has a complex and time-consuming manufacturing procedure, but also has a low manufacturing efficiency.

### SUMMARY OF THE INVENTION

In accordance with one aspect of the present disclosure, a leather material includes a substrate, a TPU (thermoplastic polyurethane) adhesive layer, and at least one TPU surface layer. The substrate has a first surface and a second surface, the second surface is opposite to the first surface. The TPU adhesive layer is disposed on the first surface of the substrate. The at least one TPU surface layer is disposed on the TPU adhesive layer, the at least one TPU surface layer has an exposing surface, the exposed surface has a suede or nubuck surface texture.

In accordance with another aspect of the present disclosure, a manufacturing method of a leather material includes: providing a substrate, the substrate having a first surface and a second surface, the second surface opposite to the first surface; meltblown TPU adhesive layer on the first surface of the substrate, of which a meltblown distance is 300-500 mm; meltblown TPU surface layer on the TPU adhesive layer, of which a meltblown distance is 250-500 mm; and hot-laminating the substrate, the TPU adhesive layer, and the TPU surface layer to form a leather material.

### BRIEF DESCRIPTION OF THE DRAWINGS

Aspects of the present disclosure are understood from the following detailed description when read with the accompanying figures. It is emphasized that, in accordance with the standard practice in the industry, various features are not drawn to scale. In fact, the dimensions of the various features may be arbitrarily increased or reduced for clarity of discussion.
FIG. 1 is a schematic structural diagram of a leather material according to an embodiment of the present application.
FIG. 2 is a schematic flowchart of a manufacturing method of a leather material according to an embodiment of the present application.

### DETAILED DESCRIPTION OF THE INVENTION

It is to be understood that the following disclosure provides many different embodiments or examples, for implementing different features of various embodiments. Specific examples of components and arrangements are described below to simplify the present disclosure. The present disclosure may, however, be embodied in many different forms and should not be construed as being limited to the embodiments set forth herein; rather, these embodiments are provided so that this description will be thorough and complete, and will fully convey the present disclosure to those of ordinary skill in the art. It will be apparent, however, that one or more embodiments may be practiced without these specific details.

In addition, the present disclosure may repeat reference numerals and/or letters in the various examples. This repetition is for the purpose of simplicity and clarity and does not in itself dictate a relationship between the various embodiments and/or configurations discussed.

It will be understood that when an element is referred to as being "on" another element, it can be directly on the other element or intervening elements may be present. In contrast, when an element is referred to as being "directly on" another element, there are no intervening elements present.

It will be understood that singular forms "a", "an" and "the" are intended to include the plural forms as well, unless the context clearly indicates otherwise.

Unless otherwise defined, all terms (including technical and scientific terms) used herein have the same meaning as commonly understood by one of ordinary skill in the art to which this invention belongs. It will be further understood that terms; such as those defined in commonly used dictionaries, should be interpreted as having a meaning that is consistent with their meaning in the context of the relevant art and the present disclosure, and will not be interpreted in an idealized or overly formal sense unless expressly so defined herein.

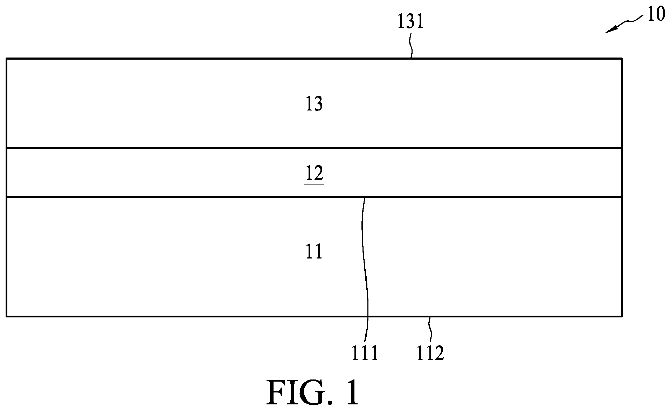

FIG. 1 is a schematic structural diagram of a leather material according to an embodiment of the present application. In an embodiment, a leather material 10 of the present application includes a substrate 11, a thermoplastic polyurethane (TPU) adhesive layer 12, and at least one TPU surface layer 13. The leather material 10 of the present application may be applied to artificial leather, or may be applied to suede or nubuck, but is not limited to the foregoing.

The substrate 11 includes a first surface 111 and a second surface 112. The second surface 112 is opposite to the first surface 111. The substrate 11 may be a woven fabric, a non-woven fabric, a mesh fabric, a recyclable woven fabric, a recyclable non-woven fabric, a recyclable mesh fabric, or a spunlaced fabric, or may alternatively be a different material depending on an actual requirement to satisfy an actual application.

In an embodiment, the TPU adhesive layer 12 is disposed on the first surface 111 of the substrate 11. The content of the TPU adhesive layer 12 is 50-150 g/m², and the density of the TPU adhesive layer 12 is 0.2-0.4 g/cm³. In an embodiment, the content of the TPU adhesive layer 12 may be 90-120 g/m².

In an embodiment, the TPU surface layer 13 is disposed on the TPU adhesive layer 12. The content of the TPU surface layer 13 is 100-350 g/m², and the density of the TPU surface layer 13 is 0.2-0.9 g/cm³. In an embodiment, the content of the TPU surface layer 13 is 100-200 g/m², and the density of the TPU surface layer 13 is 0.25-0.5 g/cm³. In an embodiment, the TPU adhesive layer 12 is disposed between the substrate 11 and the TPU surface layer 13 and used as an adhering layer to increase the peeling strength of the leather material 10 up to above 0.8 kg/cm.

In an embodiment, the TPU surface layer 13 includes an exposing surface 131. The exposing surface 131 has a fluffy feeling. In an embodiment, the exposing surface 131 may be grinded to form a suede surface having a textile feeling of suede. By a peeling test on a peeling test machine (tension machine), the peeling strength of a leather material having the suede surface is greater than 0.8 kg/cm. By a wear-resisting test on a wear-resisting test machine (STOLL test machine), the wear resistance of a leather material having the suede surface is greater than 950 cycles test.

In an embodiment, the exposing surface 131 may be grinded to form a nubuck surface having a textile feeling of nubuck. A fluffy feeling of the nubuck surface is less than the fluffy feeling of the suede surface. By a peeling test on a peeling test machine (tension machine), the peeling strength of a leather material having the nubuck surface is greater than 1.0 kg/cm. By a wear-resisting test on the wear-resisting test machine (STOLL test machine), the wear resistance of a leather material having the nubuck surface is greater than 1500 cycle test.

Therefore, the leather material of the present application is made of the TPU material, and may have the textile feeling of suede or nubuck, so that the leather material 10 of the present application may have a fuzzy feeling or a puffy feeling to have appearance and textile feeling of leather. Moreover, by configuring the content or density of the TPU adhesive layer and the TPU surface layer, the leather material 10 of the present application may have a high peeling strength and a high wear resistance, to obtain a predetermined mechanical strength.

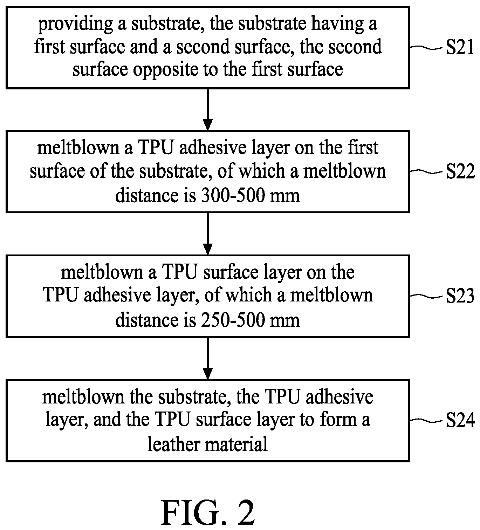

FIG. 2 is a schematic flowchart of a manufacturing method of a leather material according to an embodiment of the present application. In combination with FIG. 1 and FIG. 2, first referring to step S21, a substrate 11 is provided. The substrate 11 includes a first surface 111 and a second surface 112. The second surface 112 is opposite to the first surface 111. The substrate 11 may be a woven fabric, a non-woven fabric, a mesh fabric, a recyclable woven fabric, a recyclable non-woven fabric, a recyclable mesh fabric, or a spunlaced fabric, or may alternatively be a different material depending on an actual requirement to satisfy an actual application.

Referring to step S22, a TPU adhesive layer 12 is meltblown onto the first surface 111 of the substrate 11, of which the meltblown distance is 300-500 mm. The meltblown distance is a distance from a first blow head (not shown) to the first surface 111 of the substrate 11. The meltblown distance may have a relatively good fiber distribution.

In an embodiment, in the step of meltblown the TPU adhesive layer 12, a low-melting point TPU polymer is used, the melting point thereof is 80-150°C, and the low-melting point TPU polymer is dehumidified for 4 hours in a drying system (not shown), so that the moisture content thereof is below 200 ppm. The low-melting point TPU polymer is heated and meltblown to form the TPU adhesive layer 12, and the melting point of the TPU adhesive layer 12 is 80-150°C.

Referring to step S23, a TPU surface layer 13 is meltblown onto the TPU adhesive layer 12, of which the meltblown distance is 250-500 mm. The meltblown distance is a distance from a second blow head (not shown) to the TPU adhesive layer 12. The meltblown distance may have a relatively good fiber distribution.

In an embodiment, in the step of meltblown the TPU surface layer 13, a TPU polymer is used, the melting point thereof is 160-220°C, and the TPU polymer is dehumidified for 4 hours in a drying system (not shown), so that the moisture content thereof is below 200 ppm. The TPU polymer is heated and meltblown to form the TPU surface layer 13, and the melting point of the TPU surface layer 13 is 160-220°C.

Referring to step S24, the substrate 11, the TPU adhesive layer 12, and the TPU surface layer 13 are hot-laminated to make the leather material 10. In an embodiment, the working temperature of the hot-laminating treatment is 100-150°C.

In an embodiment, after the step of the hot-laminating treatment, a step of a grinding treatment is included to grind an exposing surface 131 of the TPU surface layer 13, and the exposing surface 131 has a fluffy feeling.

In an embodiment, the exposing surface 131 may be grinded to form a suede surface having a textile feeling of suede. By a peeling test on a peeling test machine (tension machine), the testing speed is 50 mm/min, and the specification of a test coupon is 2.54 cm^{∗} 15.24 cm. Next, an average value most frequently occurring among average values in intervals (every 2 cm is an interval, a total of 5 intervals). Test results show that: the peeling strength of a leather material having the suede surface is greater than 0.8 kg/cm. By a wear-resisting test on a wear-resisting test machine (STOLL test machine), first an air table on a rotary disk is determined, after the air table is pressurized, the height of a leather film is 15 mm, and the pressure value is 6±0.5 PSI. A test coupon with the diameter of 112 mm is then placed and fixed on the rotary disk. Sandpapers (the model is K225-320J) are used, and preload 0.5 pound of weight is added, to perform the wear-resisting test. The rotary disk is first rotated by 25 rounds each time before testing, to determine whether the material is fixed, and whether the sandpaper and the test coupon are in good condition needs to be assessed every 300 rounds. Test results show that: the wear resistance of a leather material having the suede surface is greater than 950 cycles test.

In an embodiment, the exposing surface 131 may be grinded to form a nubuck surface having a textile feeling of nubuck. By a peeling test on a peeling test machine (tension machine), the testing speed is 50 mm/min, and the specification of a test coupon is 2.54 cm^{∗} 15.24 cm. Next, an average value most frequently occurring among average values in intervals (every 2 cm is an interval, a total of 5 intervals). Test results show that: the peeling strength of a leather material having the nubuck surface is greater than 1.0 kg/cm. By a wear-resisting test on a wear-resisting test machine (STOLL test machine), first an air table on a rotary disk is determined, after the air table is pressurized, the height of a leather film is 15 mm, and the pressure value is 6±0.5 PSI. A test coupon with the diameter of 112 mm is then placed and fixed on the rotary disk. Sandpapers (the model is K225-320J) are used, and preload 0.5 pound of weight is added, to perform the wear-resisting test. The rotary disk is first rotated by 25 rounds each time before testing, to determine whether the material is fixed, and whether the sandpaper and the test coupon are in good condition needs to be assessed every 300 rounds. Test result show that: the wear resistance of a leather material having the nubuck surface is greater than 1500 cycles test.

The present disclosure is illustrated in detail with the following embodiments, but it does not mean that the present disclosure is only limited to the content disclosed by these embodiments.

### [Embodiment 1]

A non-woven of a PET material was used as the substrate 11.

TPU pellets with the hardness is 70-90 Shore A and the melting point of 100-150°C were used and dried for 4 hours at a predetermined drying temperature of 80°C, and the moisture content was measured below 100 ppm. A first extruder was used to melt the TPU pellets. Temperatures of the first extruder from a feeding hopper to an outlet were successively 80°C, 180°C, 200°C, 210°C, 220°C, and 230°C, the polymer temperature at the end of the extruder was 230°C, the DIE-body temperature was 230°C, the hot air temperature of a spinneret was 250°C, and the spinneret pressure was controlled above 4.5 MPa and below 10 MPa. The TPU adhesive layer 12 was meltblown and laminated onto the substrate 11 in a fibrous manner. The meltblown distance from a first blow head of the first extruder to the first surface 111 of the substrate 11 was 300 mm. The average fiber fineness of the TPU adhesive layer 12 was about 10 µm. The thickness of the TPU adhesive layer 12 was about 0.15 mm. The weight of the TPU adhesive layer 12 was 90-120 g/m².

TPU pellets with the hardness is 70-90 Shore A and the melting point of 150-180°C were used and dried for 4 hours at a predetermined drying temperature of 80°C, and the moisture content was measured below 100 ppm. A second extruder was used to melt the TPU pellets. Temperatures of the first extruder from a feeding hopper to an outlet were successively 90°C, 200°C, 220°C, 230°C, 240°C, and 250°C, the polymer temperature at the end of the extruder was 250°C, the DIE-body temperature was 250°C, the hot air temperature of a spinneret was 260°C, the spinneret pressure was controlled above 4.5 MPa and below 10 MPa. The TPU surface layer 13 was meltblown and laminated onto the TPU adhesive layer 12 in a fibrous manner. The meltblown distance from a second blow head of the second extruder to the TPU adhesive layer 12 was 250 mm. The average fiber fineness of the TPU surface layer was about 5-50 µm. The thickness of the TPU surface layer 13 was about 0.35-0.45 mm. The weight of the TPU surface layer 13 was 200-350 g/m².

A laminated three-layer structure (the substrate 11, the TPU adhesive layer 12, and the TPU surface layer 13) was combined by using flat ironing wheels. Temperatures of preheating wheels were 110°C and 150°C. The temperature of a pressing wheel was 50°C. The wheel gap was 1.00 mm. The production rate was 9 m/min.

The exposing surface 131 of the TPU surface layer 13 was subject to surface grinding. A first round of sandpaper was used for grinding, the first round used 120 meshes sandpaper, the rotation speed of grinding was 800-1000 rpm, and the TPU surface layer 13 was grinded by a thickness of 0.05 mm. Then, a second round of sandpaper was used for grinding, the second round used 150 meshes sandpaper, the rotation speed of grinding was 800-1000 rpm, and the TPU surface layer 13 was further grinded by a thickness of 0.05 mm. Next, a third round of sandpaper was used for grinding, the third round used 240 meshes sandpaper, the rotation speed of grinding was 600-800 rpm, and the TPU powder of the exposing surface 131 of the TPU surface layer 13 was cleaned. Further, a fourth round of sandpaper was used for grinding, the fourth round of sandpaper was used 400 meshes sandpaper, the rotation speed of grinding was 600-800 rpm, and the exposing surface 131 of the TPU surface layer 13 was finally trimmed, so that a grinded section had more detailed touch and the textile feeling of nubuck. The peeling strength of the leather material in this example was above 3 kg/cm.

Therefore, by using the manufacturing method of the leather material of the present application, there is no need to use any environmentally harmful solvents to satisfy a requirement for environmental protection. In the present application, the leather material 10 of the present application may be manufactured by using the meltblown process, so as to save complex processes and time, and improve manufacturing efficiency. Moreover, the meltblown distance between the TPU adhesive layer and the TPU surface layer is used to have a relatively good fiber distribution. Therefore, the leather material 10 of the present application may have a high peeling strength and a high wear resistance, to obtain a predetermined mechanical strength. Through the grinding treatment, the leather material 10 of the present application may have the textile feeling of suede or nubuck to have appearance and textile feeling of the leather.

Moreover, the scope of the present application is not intended to be limited to the particular embodiments of the process, machine, manufacture, and composition of matter, means, methods and steps described in the specification. As those skilled in the art will readily appreciate form the present disclosure, processes, machines, manufacture, compositions of matter, means, methods, or steps, presently existing or later to be developed, that perform substantially the same function or achieve substantially the same result as the corresponding embodiments described herein may be utilized in accordance with some embodiments of the present disclosure.

Accordingly, the appended claims are intended to include within their scope such processes, machines, manufacture, and compositions of matter, means, methods or steps. In addition, each claim constitutes a separate embodiment, and the combination of various claims and embodiments are within the scope of the invention.

## Claims

1. A leather material (10), comprising:
a substrate (11), having a first surface (111) and a second surface (112), the second surface opposite to the first surface;
a thermoplastic polyurethane, TPU, adhesive layer (12), disposed on the first surface (111) of the substrate; and
at least one TPU surface layer (13), disposed on the TPU adhesive layer, the at least one TPU surface layer having an exposing surface (131), the exposing surface having a textile feeling of suede or a textile feeling of nubuck.

2. The leather material (10) of claim 1, wherein the density of the TPU adhesive layer (12) is 0.2-0.4 g/cm³.

3. The leather material (10) of claim 1, wherein the density of the TPU surface layer (13) is 0.2-0.9 g/cm³, and the average fiber fineness of the TPU surface layer is 5-50 µm.

4. The leather material (10) of one of the preceding claims, wherein the substrate (11) may be a woven fabric, a non-woven fabric, a mesh fabric, a recyclable woven fabric, a recyclable non-woven fabric, a recyclable mesh fabric, or a spunlaced fabric.

5. The leather material (10) of preceding claims, wherein the exposing surface (131) has a fluffy feeling.

6. The leather material (10) of claim 5, wherein the exposing surface (131) is a suede surface or a nubuck surface.

7. The leather material (10) of preceding claims, wherein the peeling strength of the leather material is larger than 0.8 kg/cm.

8. The leather material (10) of preceding claims, wherein the content of the TPU adhesive layer (12) is 50-150 g/m², and the content of the TPU surface layer (13) is 100-350 g/m².

9. The leather material (10) of claim 8, wherein the content of the TPU adhesive layer (12) is 90-120 g/m², and the content of the TPU surface layer (13) is 100-200 g/m².

10. A manufacturing method of a leather material (10), comprising:
(S21): providing a substrate (11), the substrate having a first surface (111) and a second surface (112), the second surface opposite to the first surface;
(S22): meltblown TPU adhesive layer (12) on the first surface of the substrate, of which a meltblown distance is 300-500 mm;
(S23): meltblown a TPU surface layer (13) on the TPU adhesive layer, of which a meltblown distance is 250-500 mm; and
hot-laminating the substrate (11), the TPU adhesive layer (12), and the TPU surface layer (13) to form a leather material (10).

11. The manufacturing method of claim 10, wherein in the step (S22) of meltblown the TPU adhesive layer (12), a low-melting point TPU polymer is used, the melting point thereof is 80-150°C, the melting point of the TPU adhesive layer is 80-150°C.

12. The manufacturing method of claim 10 or 11, wherein in the step (S23) of meltblown the TPU surface layer (13), a TPU polymer is used, the melting point thereof is 160-220°C, and the working temperature of the hot-laminating treatment is 100-150°C.

13. The manufacturing method of one of claims 10-12, further comprising a step of a grinding treatment to grind an exposing surface (131) of the TPU surface layer (13), and the exposing surface having a fluffy feeling, the exposing surface is a suede surface or a nubuck surface.

14. The manufacturing method of claim 13, wherein the grinding treatment comprises a step of using a plurality of sandpapers to grind the exposing surface (131) of the TPU surface layer (13).

15. The manufacturing method of claim 14, wherein the grinding treatment comprises: using a first round of sandpaper for grinding, the first round of sandpaper was used 120 meshes specification, the rotation speed of grinding is 800-1000 rpm, and the TPU surface layer (13) is grinded by a thickness of 0.05 mm; using a second round of sandpaper for grinding, the second round of sandpaper was used 150 meshes specification, the rotation speed of grinding is 800-1000 rpm, and the TPU surface layer (13) is further grinded by a thickness of 0.05 mm; using a third round of sandpaper for grinding, the third round of sandpaper was used 240 meshes specification, the rotation speed of grinding is 600-800 rpm, and TPU powder of the exposing surface (131) of the TPU surface layer is cleaned; using a fourth round of sandpaper for grinding, the fourth round of sandpaper was used 400 meshes specification, the rotation speed of grinding is 600-800 rpm, and the exposing surface (131) of the TPU surface layer is trimmed.
